**Europäisches Patentamt**

**European Patent Office**

**Office européen des brevets**

(19)

(11) Veröffentlichungsnummer: **0 379 017**
**A2**

(12) **EUROPÄISCHE PATENTANMELDUNG**

(21) Anmeldenummer: 90100255.0

(22) Anmeldetag: 08.01.90

(51) Int. Cl.⁵: **B61L 25/04, B61L 23/00**

(30) Priorität: 14.01.89 DE 3900978

(43) Veröffentlichungstag der Anmeldung:
25.07.90 Patentblatt 90/30

(84) Benannte Vertragsstaaten:
AT BE CH DE ES FR GB IT LI NL

(71) Anmelder: LOHWASSER ELEKTROTECHNIK GMBH
Furthstrasse 33
D-6129 Lützelbach 5(DE)

(72) Erfinder: Walleczek, Thomas
Jocksberg 30
D-6129 Lützelbach 2(DE)

(74) Vertreter: Gornott, Dietmar, Dipl.-Ing.
Zilleweg 29
D-6100 Darmstadt 12(DE)

(54) **Einrichtung zum Identifizieren von längs einer Bahn bewegten Gegenständen.**

(57) Bei einer Einrichtung zum Identifizieren von längs einer Bahn bewegten Gegenständen, vorzugsweise Transportwagen, die mit einem Informationsträger versehen sind, sind mindestens drei sich in Bewegungsrichtung erstreckende Reihen von Markierungen vorgesehen. Jeweils einer Reihe ist ein ortsfest angeordnetes Abtastelement zugeordnet. Die Markierungen einer ersten und einer dritten Reihe enthalten die abzutastende Information. Die Markierungen einer zweiten Reihe sind in Bewegungsrichtung gegenüber den Markierungen der ersten und der dritten Reihe versetzt angeordnet und unabhängig von der jeweiligen Information vorhanden.

Fig. 3

EP 0 379 017 A2

## Einrichtung zum Identifizieren von längs einer Bahn bewegten Gegenständen

Die Erfindung betrifft eine Einrichtung zum Identifizieren von längs einer Bahn bewegten Gegenständen, vorzugsweise Transportwagen, die mit einem Informationsträger versehen sind.

Es ist bekannt, bei betrieblichen Transportsystemen die zu transportierenden Gegenstände oder die Transportwagen mit einem Informationsträger zu versehen. Die auf dem Informationsträger mit Hilfe geeigneter Markierungen aufgebrachte Information kann von Leseeinrichtungen gelesen und verarbeitet werden. Auf diese Weise ist eine Steuerung der transportierten Gegenstände bzw. der Transportwagen entsprechend der aufgebrachten Information möglich.

Aufgabe der vorliegenden Erfindung ist es, eine Einrichtung zum Identifizieren von längs einer Bahn bewegten Gegenständen vorzuschlagen, welche unter schwierigen Betriebsbedingungen einwandfrei arbeitet und einen möglichst geringen technischen Aufwand erfordert.

Die erfindungsgemäße Einrichtung ist dadurch gekennzeichnet, daß mindestens drei sich in Bewegungsrichtung erstreckende Reihen von Markierungen vorgesehen sind, daß jeweils einer Reihe ein ortsfest angeordnetes Abtastelement zugeordnet ist und daß die Markierungen einer ersten und einer dritten Reihe die abzutastende Information enthalten und die Markierungen einer zweiten Reihe in Bewegungsrichtung gegenüber den Markierungen der ersten und der dritten Reihe versetzt angeordnet und unabhängig von der jeweiligen Information vorhanden sind.

Ein besonderer Vorteil der erfindungsgemäßen Einrichtung besteht darin, daß ein einwandfreies Identifizieren auch unter erschwerten Betriebsbedingungen möglich ist. So kann beispielsweise die Information in beiden Bewegungsrichtungen gelesen werden. Ferner werden von der erfindungsgemäßen Einrichtung keine falschen Daten abgegeben, wenn der Transportwagen anhält, zurücksetzt und weiterfährt, während sich der Informationsträger innerhalb der Leseeinrichtung befindet.

Obwohl im Rahmen der Erfindung die Markierungen auch auf dem Gegenstand selbst aufgebracht sein können, ist es häufig vorteilhaft gemäß einer Weiterbildung, die Markierungen auf einem Informationsträger anzuordnen. Dabei kann vorgesehen sein, daß der Informationsträger plattenförmig ist und vorzugsweise aus Metall besteht.

Hierdurch wird unter anderem eine Verwendung der erfindungsgemäßen Einrichtung bei sehr hohen Temperaturen ermöglicht.

Durch die in den Unteransprüchen aufgeführten Maßnahmen sind vorteilhafte Weiterbildungen und Verbesserungen der im Hauptanspruch angegebenen Erfindung möglich.

Einige dieser Weiterbildungen befassen sich mit einer vorteilhaften Auswerteschaltung, welche im einzelnen mittels einer speicherprogrammierbaren Steuerung (SPS), mittels digitaler Bausteine (Logik- und Speicherbausteine) oder mit einem Mikroprozessor, beispielsweise vom Typ Z80, ausgeführt sein kann.

Ausführungsbeispiele der Erfindung sind in der Zeichnung anhand mehrerer Figuren dargestellt und in der nachfolgenden Beschreibung näher erläutert. Es zeigt:

Fig. 1 in schematischer Darstellung einen Teil eines Transportsystems mit einem Transportwagen, einem Informationsträger und einer ortsfest angeordneten Leseeinrichtung,

Fig. 2 ein Ausführungsbeispiel für eine Leseeinrichtung,

Fig. 3 ein Ausführungsbeispiel für einen Informationsträger,

Fig. 4 einen Informationsträger und Zeitdiagramme der bei der Abtastung des Informationsträgers gewonnenen Signale,

Fig. 5 ein Flußdiagramm eines für eine speicherprogrammierbare Steuerung vorgesehenen Programms und

Fig. 6 Darstellungen des Inhalts zweier Schieberegister.

Gleiche Teile sind in den Figuren mit gleichen Bezugszeichen versehen.

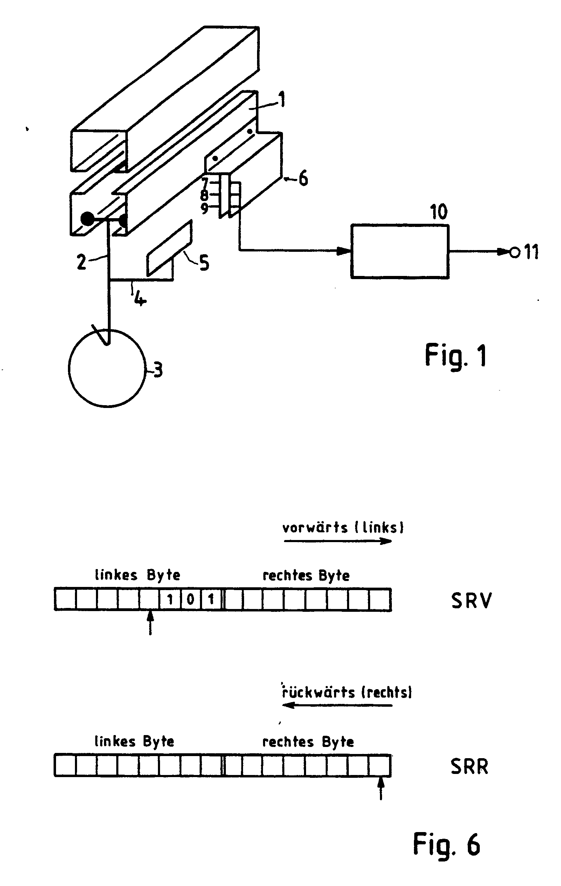

Bei dem in Fig. 1 angedeuteten Transportsystem läuft in einer Schiene 1 ein Transportwagen 2, an dem ein Gegenstand 3 hängt. An einer Strebe 4 des Transportwagens 2 ist ein Informationsträger 5 in Form einer Blechplatte angeordnet. Es sind im Rahmen der Erfindung auch andere Informationsträger, wie beispielsweise Platten aus Plastikmaterial, möglich. Passiert der Transportwagen 2 eine Stelle des Transportsystems, an welcher er identifiziert werden soll, so wird der Informationsträger 5 durch eine Leseeinrichtung 6 bewegt.

Wie im Zusammenhang mit weiteren Figuren noch genauer erläutert wird, enthält die Leseeinrichtung 6 drei übereinander angeordnete Lichtschranken 7, 8, 9 zur Abtastung von in Form von Löchern auf dem Informationsträger vorhandenen Markierungen. Die durch die Abtastung entstehenden Signale werden einer Auswerteschaltung 10 zugeführt, von deren Ausgang 11 Informationen abgenommen werden können, welche die weitere Bewegung des Transportwagens steuern oder andere Prozesse im Produktionsablauf beeinflussen.

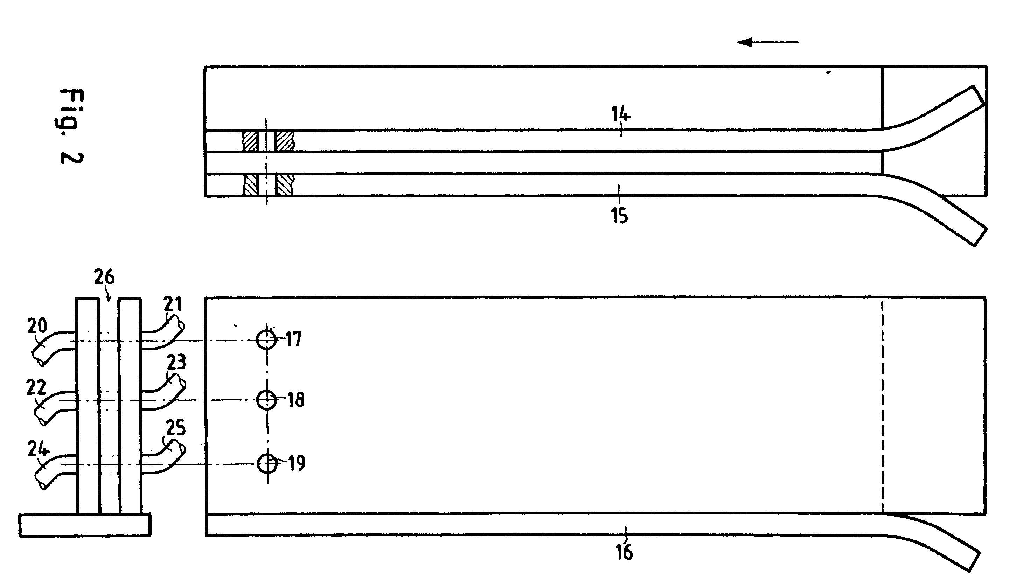

Fig. 2 zeigt drei Ansichten eines Ausführungsbeispiels einer Leseeinrichtung 6 (Fig. 1), bei welcher zwei seitliche Führungsplatten 14, 15 einen Kanal 26 für den Informationsträger bilden. Damit der Informationsträger auch bei einer relativ ungenauen Führung des Transportwagens 2 sicher in die Leseeinrichtung geführt wird, sind die seitlichen Führungsplatten 14, 15 sowie eine weitere Führungsplatte 16 am Anfang der Leseeinrichtung trichterförmig aufgebogen. An drei übereinanderliegenden Stellen sind in den seitlichen Führungsplatten 14, 15 Bohrungen vorgesehen, welche zur Aufnahme von Lichtleitern dienen, die in Fig. 2 lediglich angedeutet sind und in an sich bekannter Weise mit Fotodioden und lichtemittierenden Dioden verbunden sind.

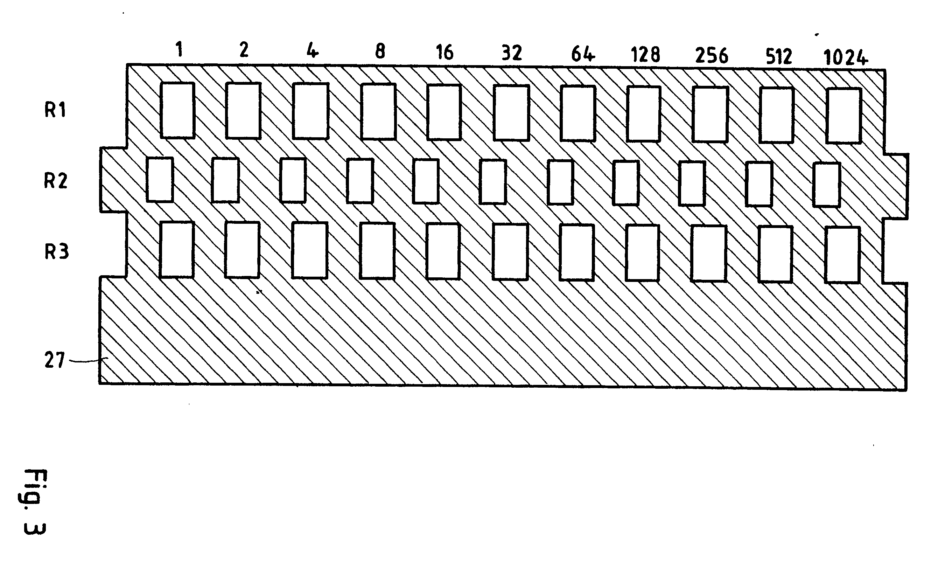

Der Informationsträger gemäß Fig. 3 weist drei Reihen von Löchern auf. Dabei sind in der mittleren Reihe R2 unabhängig von der jeweiligen Information sämtliche Löcher vorhanden. Dieses sind bei dem dargestellten Ausführungsbeispiel 11 Löcher. Die in den Reihen R1 und R3 nicht schraffiert dargestellten Flächen bedeuten lediglich die Positionen von Löchern, welche je nach codierter Information vorhanden sind. Dabei ist die Information derart codiert, daß von den übereinanderliegenden Löchern der Reihen R1 und R3 jeweils eines vorhanden ist. Ist das obere Loch vorhanden, so bedeutet das, daß an dieser Stelle der darzustellenden Binärzahl eine 1 ist, während ein Loch in der Reihe R3 eine 0 repräsentiert. Dadurch, daß in Längsrichtung gesehen 11 Löcher vorgesehen sind, kann eine 11-stellige Binärzahl dargestellt werden mit insgesamt 2048 verschiedenen Werten. Im mittleren, für die Reihe R2 vorgesehen Bereich ist der Informationsträger etwas länger, was zum Erkennen des Anfangs des Lesevorgangs beiträgt. Im unteren Bereich 27 kann der Informationsträger in geeigneter Weise mit dem Transportwagen verbunden werden. Die Erfindung ist nicht darauf beschränkt, daß die Reihen in der dargestellten Reihenfolge angeordnet sind. So kann die Reihe R2 auch seitlich und die beiden Reihen R1 und R3 nebeneinander angeordnet werden.

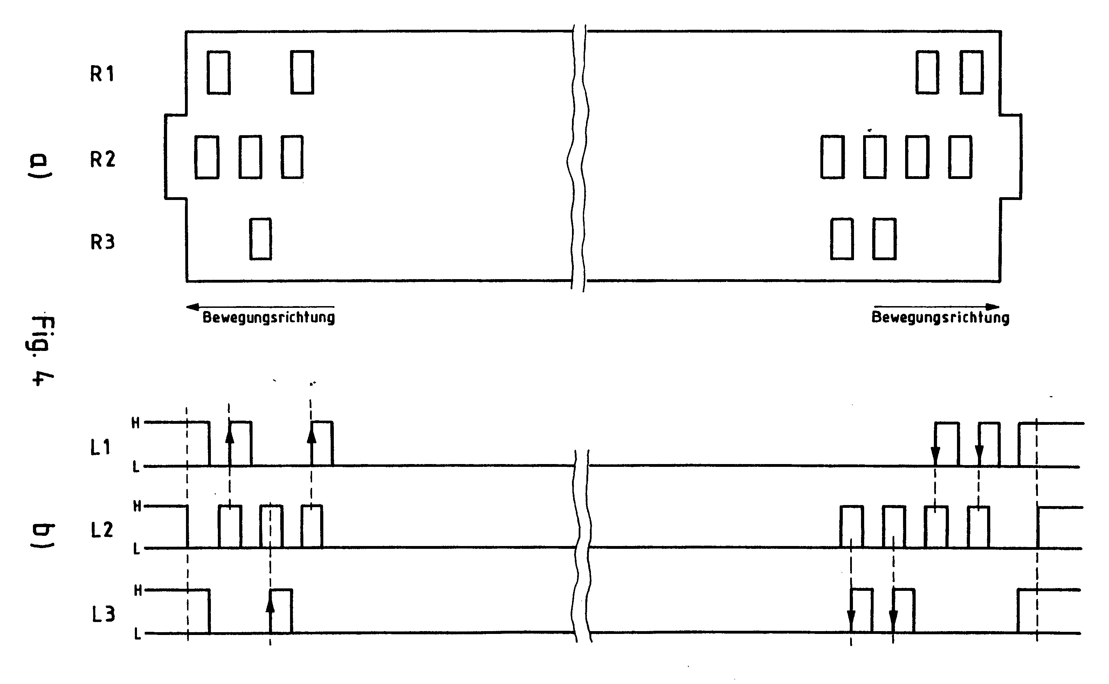

Fig. 4a) zeigt den Informationsträger in vereinfachter Weise mit nur wenigen Löchern. Dazu passend sind in Fig. 4b) die Signale L1, L2, L3 dargestellt, welche von den Fotodioden der Lichtschranken erzeugt werden. Beide Figuren stellen in der jeweils linken Hälfte die Vorgänge bei einer Bewegung des Informationsträgers 5 nach links und in der rechten Hälfte die Vorgänge bei einer Bewegung des Informationsträgers 5 nach rechts dar. Dabei entspricht der Pegel H einer Durchlässigkeit und der Pegel L einer Undurchlässigkeit der jeweiligen Lichtschranke.

Bevor bei einer Bewegung nach links der Informationsträger in den Bereich der Lichtschranken gelangt, sind die Pegel der Signale L1, L2, L3 H, woran die Auswerteschaltung erkennt, daß sich kein Informationsträger 5 in der Leseeinrichtung 6 (Fig. 1) befindet. Als erstes wird beim Eintreten eines Informationsträgers in den Bereich der Lichtschranken die mittlere Lichtschranke unterbrochen, so daß das Signal L2 den Pegel L einnimmt, während die Signale L1 und L3 noch auf dem Pegel H sind. Dieses wird als Anfangskennung für den Start der Auswertung verwendet.

Bei der folgenden Auswertung werden die Flanken der Signale L1 und L3 während der Impulse des Signals L2 abgefragt. Bei der Bewegung nach links weist jeweils eines der Signale L1 oder L3 positive Flanken während der Impulse des Signals L2 auf. Bei einer Bewegung nach rechts treten beim Signal L1 oder L3 während der Impulse des Signals L2 negative Flanken auf. Dieses kann in einfacher Weise zu einer Erkennung der Bewegungsrichtung ausgenutzt werden. Außerdem werden die Ergebnisse nur dann als richtig erkannt und ausgegeben, wenn für die gesamte Anzahl von Impulsen des Signals L2 Flanken mit gleichem Vorzeichen der Signale L1 oder L3 festgestellt werden.

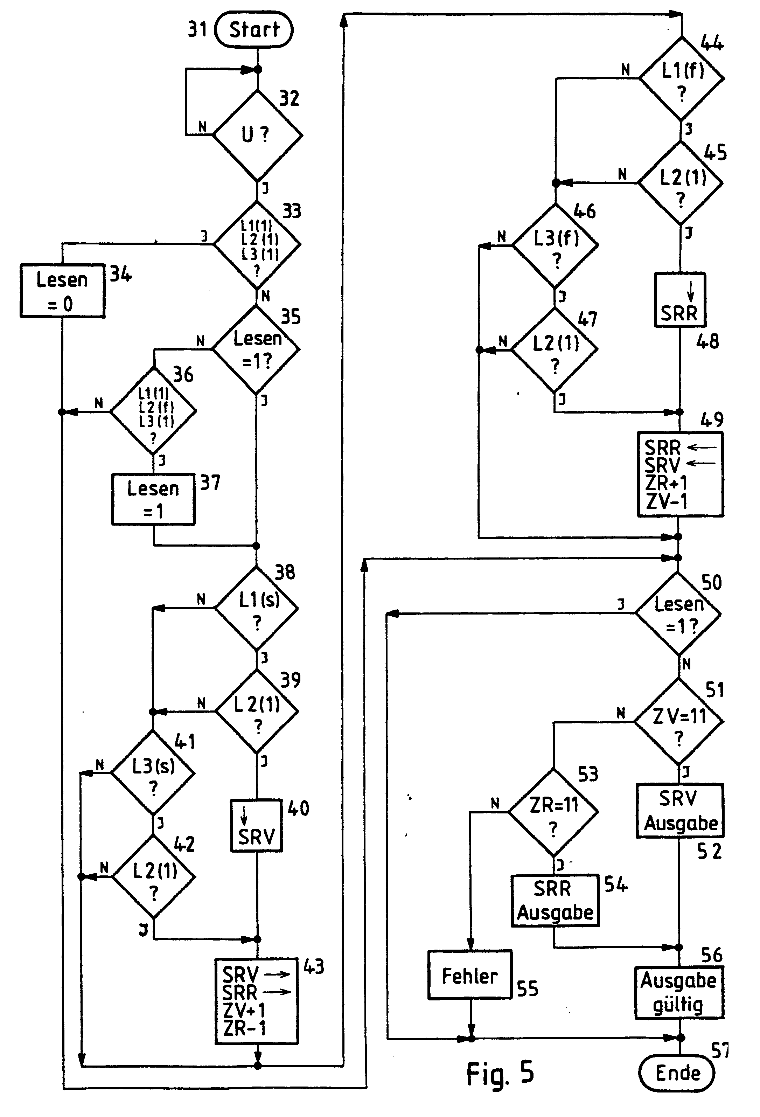

Bei dem in Fig. 5 dargestellten Programm werden die Schieberegister SRV und SRR durch jeweils zwei Bytes realisiert, was schematisch in Fig. 6 dargestellt ist. Von den jeweils 16 Stellen werden jedoch nur 11 Stellen entsprechend der Anzahl der Löcher des Informationsträgers bzw. der Anzahl der Stellen des Informationswortes genutzt. In Fig. 6 sind diejenigen Stellen der Schieberegister, in welche die jeweils gelesene Binärstelle eingeschrieben wird, mit einem Pfeil gekennzeichnet. Im Zusammenhang mit der Erläuterung des Flußdiagramms werden für die jeweiligen Zustände der Signale L1, L2 und L3 folgende Symbole verwendet:

L1(s), L3(s) = steigende Flanke des Signals L1 bzw. L3,

L1(f), L3(f) = fallende Flanke des Signals L1 bzw. L3,

L1(1),L2(1),L3(1) = H-Pegel des jeweiligen Signals, Loch ist vorhanden; Informationsträger außerhalb der Leseeinrichtung, wenn alle Signale H-Pegel aufweisen,

L1(0),L2(0),L3(0) = L-Pegel des jeweiligen Signals, Loch ist nicht vorhanden bzw. Lichtstrahl ist unterbrochen.

Bei dem Programm werden zwei Phasen voneinander unterschieden, nämlich eine erste Phase, in welcher die Lesung der Information erfolgt, und eine weitere Phase, in welcher keine Lesung erfolgt und zu deren Beginn die vorangegangene Lesung ausgewertet wird. Zur Kennung, ob der Lesevorgang abläuft, wird ein Flag "Lesen" gesetzt. Nach dem Start des Programms bei 31 wird bei 32 eine Warteschleife durchfahren, falls die Spannungsversorgung der Leseeinrichtung 10 (Fig. 1) nicht eingeschaltet sein sollte. Ist jedoch die Spannung vorhanden, so wird bei 33 das Programm in Abhängigkeit davon verzweigt, ob der Informationsträger in der Leseeinrichtung ist. Ist er nämlich außerhalb der Leseeinrichtung, liegt der Zustand L1(1); L2(1); L3(1) vor, und das Programm umgeht die im folgenden beschriebenen zum Lesen erforderlichen Programmschritte und löscht das Flag Lesen bei 34.

Nach der Verzweigung 33 wird für den Fall, daß sich der Informationsträger in der Leseeinrichtung befindet, bei 35 das Programm in Abhängigkeit davon, ob das Flag Lesen gesetzt ist, verzweigt. Ist das Flag Lesen nicht gesetzt und ist auch keine Startkennung vorhanden, die sich aus dem Zustand L1(1); L2(0); L3(1) ergibt, so wird über eine weitere Verzweigung 36 ein Lesevorgang ebenfalls umgangen. Ist jedoch bei der Verzweigung 36 eine Startkennung vorhanden, wird das Flag Lesen bei 37 gesetzt, worauf bei 38 der eigentliche Lesevorgang beginnt. Ist bereits bei der Verzweigung 35 das Flag Lesen gesetzt, so wird bei 38 der bereits laufende Lesevorgang fortgesetzt. Dazu bildet die Verzweigung 38 mit der Verzweigung 39 eine Und-Verknüpfung, bei welcher das Programm nur dann unmittelbar weiter ausgeführt wird, wenn während das Signal L2 den H-Pegel aufweist, eine steigende Flanke L1(s) auftritt. Ist dieses der Fall, so wird anschließend im Programmteil 40 im Schieberegister SRV das mit dem Pfeil (Fig. 6) gekennzeichnete Bit auf 1 gesetzt.

Liegt jedoch während L2(1) keine positive Flanke L1(s) vor, so wird das Programm über die Verzweigungen 41, 42 fortgesetzt, die ebenfalls eine Und-Verknüpfung darstellen und den folgenden Programmteil 43 nur aktivieren, wenn während L2(1) eine steigende Flanke L3(s) vorliegt. Ist dieses der Fall, so werden ebenso wie nach dem Programmteil 40 bei 43 die Schieberegister SRV und SRR um eine Stelle vorwärts geschoben, ein Zähler ZV um 1 inkrementiert und ein Zähler ZR um 1 dekrementiert. Ferner wird im Schieberegister SRR die in Fig. 6 mit dem Pfeil gekennzeichnete Stelle gelöscht.

Hat sich während der Programmteile 38, 39, 41 und 42 keine steigende Flanke der Signale L1, L2 während L2(1) ergeben, so werden die Inhalte der Schieberegister und der Zähler zunächst nicht verändert. Es wird in den folgenden Programmteilen 44, 45, 46, 47 geprüft, ob während L2(1) fallende Flanken L1(f) oder L3(f) vorliegen. In Abhängigkeit davon wird bei 48 die durch einen Pfeil gekennzeichnete Stelle des Schieberegisters SRR auf 1 gesetzt. Bei 49 werden die Schieberegister SRR und SRV rückwärts geschoben, der Zähler ZR um 1 inkrementiert und der Zähler ZV um 1 dekrementiert. Schließlich wird bei 49 die mit dem Pfeil gekennzeichnete Stelle des Schieberegisters SRV gelöscht. Bei 50 wird geprüft, ob das Flag Lesen gesetzt ist. Ist dieses der Fall, werden die Programmteile 51 bis 56 umgangen und das Programm ist bei 57 beendet, worauf es, beginnend beim Start 31, solange wiederholt wird, bis der Informationsträger außerhalb der Leseeinrichtung ist. Danach wird das Programm bei 33 in Richtung auf den Programmteil 34 verzweigt und das Flag Lesen gelöscht. Dementsprechend wird nach der Verzweigung 50 die Auswertung mit der Verzweigung 51 mit der Abfrage begonnen, ob der Zähler ZV den Wert 11 erreicht hat. Ist dieses nicht der Fall, wird bei 53 geprüft, ob der Zähler ZR den Wert 11 erreicht hat. Sofern dieses auch nicht der Fall ist, wird bei 55 die Information Lesefehler gesetzt. Ist jedoch der Zählerstand des Zählers ZV 11, wird bei 52 der Inhalt des Schieberegisters SRV in ein Ausgangsregister eingeschrieben. Ist statt dessen der Inhalt des Zählers ZR 11, so wird bei 54 das Schieberegister SRR um eine Stelle rückwärts geschoben und der Inhalt in das Ausgangsregister eingeschrieben. Bei 56 wird die Information ausgegeben, daß das Wort im Ausgangsregister gültig ist.

Aus dem Ausgangsregister kann der Inhalt zur beliebigen Verwendung, zum Beispiel zur Stellung einer Weiche oder zur Inbetriebsetzung einer Maschine, welche den am Transportwagen hängenden Gegenstand bearbeitet, ausgelesen werden.

Wie bereits erwähnt, zeigt Fig. 6 schematisch die beiden Schieberegister SRV und SRR, die von jeweils zwei Bytes im Arbeitsspeicher der speicherprogrammierbaren Steuerung gebildet werden. Bei einem Durchfahren des Informationsträgers durch die Leseeinrichtung nach links (siehe Fig. 4a)) wird entsprechend den in Fig. 4b) gezeigten Impulsen nach der Anfangskennung L1(1); L2(0); L3(1) während des folgenden Impulses von L2 eine positive Flanke des Signals L1 festgestellt und dementsprechend eine 1 in die mit dem Pfeil gekennzeichnete Stelle des Schieberegisters SRV eingeschrieben und eine Stelle nach rechts geschoben. Beim nächsten Impuls des Signals L2 liegt beim Signal L3 eine positive Flanke vor, wodurch in das Schieberegister SRV eine 0 eingeschrieben wird und der Inhalt des Schieberegisters SRV ebenfalls um eine Stelle nach rechts geschoben wird. Bei dem dritten in Fig. 4b) dargestellten Impuls des Signals L2 liegt wieder eine positive Flanke des Signals L1 vor, so daß eine 1 eingeschrieben wird und das Schieberegister zur Aufnahme der folgenden Binärstelle nach rechts geschoben wird. Der zu diesem Zeitpunkt vorliegende Zustand des Schieberegisters SRV ist in Fig. 6 dargestellt.

Während der nach links erfolgenden Bewegung (Fig. 4a)) wird das Schieberegister SRR ebenfalls vorwärts geschoben, was jedoch dann keine Bedeutung hat, wenn der Inhalt des Schieberegisters 0 ist. Im Falle einer Bewegung nach rechts, wie sie jeweils in der rechten Hälfte der Figuren 4a) und 4b) dargestellt ist, wird das Schieberegister SRR in ähnlicher Weise, von der durch den Pfeil gekennzeichneten Stelle ausgehend, geladen.

Wie in dem Zusammenhang mit dem Flußdiagramm gemäß Fig. 5 erläutert wurde, findet eine Auswertung dann statt, wenn der Informationsträger die Leseeinrichtung verlassen hat (L1(1); L2(1); L3-(1)) und wenn einer der Zähler ZV bzw. ZR den Zählerstand 11 erreicht hat. Die dann in dem entsprechenden Register SRV bzw. SRR vorliegende Information kann parallel oder seriell ausgelesen und in ein als Zwischenspeicher dienendes Ausgangsregister eingeschrieben werden.

Sollte der Transportwagen stehenbleiben, wenn sich der Informationsträger in der Leseeinrichtung befindet, zurückfahren und dann wieder vorwärts weiterfahren, ergeben sich mit der erfindungsgemäßen Einrichtung keine Lesefehler. Durch die Vorzeichenumkehr der während der Impulse des Signals L2 auftretenden Flanken der Signale L1 und L3 wird bei einer Richtungsumkehr während des Lesens die bereits in das jeweilige Schieberegister eingeschriebene Information rückgängig gemacht. Bei einer weiteren Richtungsumkehr in die ursprüngliche Richtung wird lückenlos wieder gültige Information in das Schieberegister eingeschrieben.

Mit einer praktisch ausgeführten erfindungsgemäßen Einrichtung konnte eine sichere Lesung bei Transportgeschwindigkeiten von bis zu 21 m/min erreicht werden. Die Länge der Löcher in der ersten und dritten Reihe bei der praktisch ausgeführten Einrichtung betragen 6 mm, während die Abstände von Loch zu Loch größer sind, beispielsweise 8 mm betragen. Daraus ergibt sich eine Länge des Informationsträgers von ca. 20 cm.

Die Erfindung ist nicht auf das Ausführungsbeispiel beschränkt, sondern kann im Rahmen des Fachmännischen abgewandelt und weitergebildet werden. Anstelle der Löcher gemäß Fig. 3 können andere Markierungen verwendet werden, beispielsweise ein Blech mit Stegen. Auch anstelle der optischen Abtastung kann beispielsweise eine magnetische Abtastung erfolgen. Bei entsprechender Ausgestaltung der Lichtschranken ist eine Leseeinrichtung auch ohne Führungselemente für den Informationsträger möglich. Dabei können die Lichtschranken eine Weite bis zu 50 cm aufweisen, die Informationsträger können schwankend vorbeifahren und eine Schräglage bis zu ca. 12° einnehmen, ohne daß die Zuverlässigkeit der Lesung nachläßt.

**Ansprüche**

1. Einrichtung zum Identifizieren von längs einer Bahn bewegten Gegenständen, vorzugsweise Transportwagen, die mit einem Informationsträger versehen sind, dadurch gekennzeichnet, daß mindestens drei sich in Bewegungsrichtung erstreckende Reihen (R1, R2, R3) von Markierungen vorgesehen sind, daß jeweils einer Reihe ein ortsfest angeordnetes Abtastelement (7, 8, 9) zugeordnet ist und daß die Markierungen einer ersten und einer dritten Reihe (R1, R3) die abzutastende Information enthalten und die Markierungen einer zweiten Reihe (R2) in Bewegungsrichtung gegenüber den Markierungen der ersten und der dritten Reihe (R1, R3) versetzt angeordnet und unabhängig von der jeweiligen Information vorhanden sind.

2. Einrichtung nach Anspruch 1, dadurch gekennzeichnet, daß die Markierungen auf einem Informationsträger (5) angeordnet sind.

3. Einrichtung nach Anspruch 2, dadurch gekennzeichnet, daß der Informationsträger (5) plattenförmig ist und vorzugsweise aus Metall besteht.

4. Einrichtung nach einem der vorhergehenden Ansprüche, dadurch gekennzeichnet, daß die Markierungen von jeweils zwei im wesentlichen senkrecht zur Bewegungsrichtung verlaufenden Rändern begrenzt sind und daß die Markierungen der zweiten Reihe (R2) derart gegenüber den Markierungen der ersten und der dritten Reihe (R1, R3) versetzt sind, daß in Bewegungsrichtung gesehen jeweils eine Markierung der zweiten Reihe (R2) einen der Ränder der Markierungen der ersten und der dritten Reihe (R1, R3) umfaßt.

5. Einrichtung nach Anspruch 4, dadurch gekennzeichnet, daß die Markierungen im wesentlichen rechteckige Löcher sind.

6. Einrichtung nach Anspruch 4, dadurch gekennzeichnet, daß der Informationsträger (5) im Bereich der zweiten Reihe (R2) in Bewegungsrichtung gesehen länger als in den Bereichen der ersten und der dritten Reihe (R1, R3) ist.

7. Einrichtung nach einem der vorhergehenden Ansprüche, dadurch gekennzeichnet, daß von den Abtastelementen (7, 8, 9) erzeugte Signale derart verknüpft werden, daß die während des Abtastens der Markierungen der zweiten Reihe auftretenden Flanken der durch das Abtasten der ersten und dritten Reihe gewonnenen Signale einer Auswerteschaltung (10) zugeleitet werden.

8. Einrichtung nach Anspruch 7, dadurch gekennzeichnet, daß zur Abtastung der ersten, der zweiten und der dritten Reihe (R1, R2, R3) eine erste, zweite und dritte Lichtschranke (7, 8, 9) vorgesehen ist und daß eine Auswertung gestartet wird, wenn der Lichtstrahl der zweiten Lichtschranke unterbrochen und die Lichtstrahlen der anderen Lichtschranken durchlässig sind.

9. Einrichtung nach Anspruch 7, dadurch gekennzeichnet, daß in der Auswerteschaltung je Bewegungsrichtung des Informationsträgers ein Schieberegister (SRV, SRR) vorgesehen ist, daß in die Schieberegister mit der Abtastung einer Markierung der zweiten Reihe in Abhängigkeit davon, ob in der ersten oder in der dritten Reihe eine Markierung vorliegt, eine Binärstelle eingeschrieben wird, daß danach die Schieberegister in einer Richtung getaktet werden, die von dem Vorzeichen der jeweiligen Flanke des durch die Abtastung der Markierung in der ersten oder in der dritten Reihe gewonnenen Signals abhängig ist, und daß der Inhalt eines der Schieberegister (SRV, SRR) ausgegeben wird, wenn alle Lichtschranken durchlässig sind.

10. Einrichtung nach Anspruch 9, dadurch gekennzeichnet, daß ein Schieberegister (SRV, SRR) nur dann ausgelesen wird, wenn ein dem Schieberegister zugeordneter Zähler (ZV, ZR) einen der Anzahl der Markierungen der zweiten Reihe entsprechenden Wert aufweist.

1583 LR

Fig. 1

vorwärts (links)

linkes Byte    rechtes Byte

| | | | | | 1 | 0 | 1 | | | | | | | | |

SRV

rückwärts (rechts)

linkes Byte    rechtes Byte

| | | | | | | | | | | | | | | |

SRR

Fig. 6

1583 LR

Fig. 2

Fig. 3

R1

R2

R3

a)

Fig. 4

b)

L1

L2

L3

Bewegungsrichtung

Bewegungsrichtung

H

L

EP 0 379 017 A2

Fig. 5